# DEMANDE DE BREVET EUROPEEN

(11) **EP 1 104 785 A1**
(43) Date de publication de la demande: **06.06.2001**
(21) Numéro de dépôt: 00403257.9
(22) Date de dépôt: 22.11.2000
(51) Int. Cl.: C08L 67/02

(54) **Compositions de polyesters thermoplastiques à propriétés choc améliorées**

(30) Priorité: 26.11.1999 FR 9914915
(71) Demandeur: Atofina, 92091 Paris La Défense Cedex (FR)
(72) Inventeur: Bouilloux, Alain, 27300 Bernay (FR); Lacroix, Christophe, 27300 Bernay (FR)

(57) **Abrégé**

La présente invention concerne des polyesters thermoplastiques comprenant, en poids:
(i) un polyester thermoplastique,
(ii) un modifiant choc comprenant:
   (c) un copolymère (A) coeur - écorce,
   (d) un copolymère (B) de l'éthylène choisi parmi les copolymères (B1) de l'éthylène et d'un anhydride d'acide carboxylique insaturé, les copolymères (B2) de l'éthylène et d'un époxyde insaturé et leurs mélanges,
(iii) le rapport (B) / (A) étant compris entre 40/60 et 10/90 pour des proportions de modifiant choc entre 18 et 40% dans respectivement 82 à 60% de polyester,
(iv) le rapport (B) / (A) étant compris entre 40/60 et 25/75 pour des proportions de modifiant choc entre 2 et 18% dans respectivement 98 à 82% de polyester. Elle est particulièrement utile pour le PET et le PBT.

## Description

### [Domaine de l'invention]

La présente invention concerne des compositions de polyesters thermoplastiques à propriétés choc améliorées et des compositions de modifiants choc.

Les polyesters thermoplastiques tels que le PBT(polybutylène téréphtalate) et le PET(polyéthylène téréphtalate) possèdent d'excellentes propriétés de stabilité dimensionnelle, de résistance thermique ou de résistance chimique et qui sont utilisées dans les domaines électriques, électroniques ou automobiles. Cependant, à haute température, au cours des opérations de transformation, une diminution du poids moléculaire du polymère peut survenir conduisant à une diminution des propriétés d'impact. De plus, les polyesters ont de mauvaises propriétés de résistance à la rupture pour des pièces entaillées.

La présente invention fournit des polyesters thermoplastiques dans lesquels on a ajouté une composition de modifiants choc pour obtenir des propriétés choc améliorées notamment la résilience à basse température. La présente invention concerne aussi cette composition de modifiants choc qu'on additionne aux polyesters pour en améliorer les propriétés choc. Ces compositions de modifiants permettent d'atteindre des propriétés choc supérieures à celles obtenues avec chacun des composés pris séparément.

### [L'art antérieur]

Le brevet US 4,753,890 (= EP 174 343) décrit des polyesters tels que par exemple du polyéthylène téréphtalate (PET) ou du polybutylène téréphtalate (PBT) modifiés par des copolymères de l'éthylène, d'un (méth)acrylate d'alkyle et du (méth)acrylate de glycidyle.
Le brevet US 5 369 154 décrit des mélanges de PET et de polycarbonate contenant quatre modifiants différents : un copolymère comprenant un époxyde, un copolymère de type coeur-écorce (designé aussi sous le nom de core - shell), un élastomère de type SBR ou SBS ou EPR et un copolymère du type SAN ou ABS. Ces copolymères de type coeur - écorce désignent de fines particules ayant un coeur en élastomère et une écorce thermoplastique.

Le brevet EP 115 015 décrit du PET ou du PBT contenant du polyéthylène basse densité linéaire (LLDPE), des fibres de verre et éventuellement un core - shell.

Le brevet EP 133 993 décrit du PET contenant un core - shell et un copolymère de l'éthylène avec soit un acrylate d'alkyle soit de l'acide (meth)acrylique.

La demande de brevet japonais JP 01 247 454 A publiée le 3 octobre 1989 décrit du PBT contenant un copolymère éthylène - (meth)acrylate d'alkyle et un copolymère éthylène - méthacrylate de glycidyle.

Les brevets EP 838 501 et EP 511 475 décrivent des compositions semblables à celles de la demande japonaise précédente.

Le brevet EP 803 537 décrit du PET et du polycarbonate contenant un copolymère comprenant du méthacrylate de glycidyle. On mélange d'abord le polycarbonate et le copolymère comprenant du méthacrylate de glycidyle puis on incorpore ce mélange dans le PET.

Le brevet EP 187 650 décrit du PET contenant un core - shell et un copolymère de l'éthylène avec soit l'anhydride maleique soit un acide (meth)acrylique.

Le brevet EP 737 715 décrit des PBT modifiés par un modifiant choc constitué d'un mélange d'un copolymère éthylène - methacrylate de methyle - methacrylate de glycidyle et d'un copolymère de type coeur-écorce (designé aussi sous le nom de core - shell). La quantité de modifiant choc est de 5 à 20 parties pour 100 parties de polyester soit 4,8 à 16,7% pour respectivement 95,2 à 83,7% de polyester. Les proportions de copolymère au méthacrylate de glycidyle et de core -shell sont dans le rapport 15 / 85 à 20 / 80. Dans les exemples la quantité de modifiant choc est de 18 parties pour 100 parties de polyester soit 15,3% et la proportion de copolymère au méthacrylate de glycidyle sur le core -shell est dans le rapport 3/15 soit 17 / 83.

Le brevet EP 531 008 décrit des mélanges de PBT et de polycarbonate (PC) usagés (recyclés) contenant des core - shell auxquels on ajoute des copolymères fonctionnalisés pour en faire une nouvelle matière thermoplastique. Ces copolymères fonctionnalisés sont soit des copolymères éthylène - méthacrylate de glycidyle (GMA) soit des copolymères éthylène - acétate de vinyle - méthacrylate de glycidyle. La description cite des proportions de 1 à 97% de polycarbonate, de 1 à 97% de PBT, 1 à 40% de core -shell et 1 à 40% de copolymère au méthacrylate de glycidyle. En fait les mélanges de polycarbonate et de PBT qu'on veut recycler contiennent d'après les exemples 15% de core -shell ce qui correspond à des valeurs plus réalistes. On effectue ensuite des mélanges (i) de 80 parties de recyclé avec 20 parties de copolymère au méthacrylate de glycidyle et des mélanges (ii) de 90 parties de recyclé avec 10 parties de copolymère au méthacrylate de glycidyle. Les proportions sont dans le tableau EP 531 008 suivant dans lequel les parties sont en poids:

**TABLEAU EP 531 008**

| | Compositions telles que le rapport Core -Shell /PC+PBT = 15/85 | | |
|---|---|---|---|
| PC+PBT | 85 | 68 | 76,5 |
| Core-Shell (CS) | 15 | 12 | 13,5 |
| Copolymère au GMA | | 20 | 10 |
| PC+PBT+CS+Copolymère au GMA | 100 | 100 | 100 |
| Copolymère au GMA / CS | | 20/12 =(62/38) | 10/13,5 =(43/57) |
| Proportion de modifiant (Core -Shell +copolymère au GMA) dans PC+PBT | | 20+12=32% | 10+13,5=23,5% |

### [Le problème technique]

On a vu dans l'art antérieur que les polyesters saturés peuvent avoir leurs propriétés d'impact améliorées par l'addition de core-shell. Ces polymères ont une structure particulièrement bien définie ou le coeur est constitué d'un polymère à caractère élastomérique et l'écorce a un caractère thermoplastique. On a vu aussi que l'amélioration des résistances au choc peut être obtenue en incorporant en plus une phase dispersée d'un modifiant choc contenant éventuellement des fonctions réactives susceptibles de réagir avec les groupements fonctionnels des polyesters. Cette réactivité permet d'assurer une dispersion fine et homogène du modifiant de même qu'une bonne adhésion. Le core-shell peut lui aussi être fonctionnalisé pour permettre une meilleure adhésion avec la matrice. Cependant, cette réactivité est parfois élevée et peut conduire à une diminution de la fluidité. Cette baisse de fluidité est préjudiciable à l'injection de grandes pièces ou de pièces fines.

On a maintenant trouvé qu'on pouvait améliorer les propriétés choc des polyesters thermoplastiques en y ajoutant deux sortes de modifiant à savoir (a) un core - shell et (b) soit un copolymère éthylène - époxyde insaturé soit un copolymère éthylène - anhydride d'acide carboxylique soit leur mélange mais en proportions dans le polyester et dans des rapports (b)/(a) différents de ceux de l'art antérieur EP 737 715 et EP 531 008. On obtient une meilleure resistance au choc tout en conservant et même améliorant la fluidité.

### [Brève description de l'invention]

La présente invention concerne des compositions de polyesters thermoplastiques comprenant, en poids:
(i) un polyester thermoplastique,
(ii) un modifiant choc comprenant:
   (a) un copolymère (A) coeur - écorce,
   (b) un copolymère (B) de l'éthylène choisi parmi les copolymères (B1) de l'éthylène et d'un anhydride d'acide carboxylique insaturé, les copolymères (B2) de l'éthylène et d'un époxyde insaturé et leurs mélanges,
(iii) le rapport (B) / (A) étant compris entre 40/60 et 10/90 pour des proportions de modifiant choc entre 18 et 40% dans respectivement 82 à 60% de polyester,
(iv) le rapport (B) / (A) étant compris entre 40/60 et 25/75 pour des proportions de modifiant choc entre 2 et 18% dans respectivement 98 à 82% de polyester et avantageusement entre 5 et 18% dans respectivement 95 à 82% de polyester.

La présente invention concerne aussi une composition de modifiants choc qu'on peut ajouter dans les polyesters thermoplastiques pour améliorer leurs propriétés choc et comprenant :
(a) un copolymère (A) coeur - écorce,
(b) un copolymère (B) de l'éthylène choisi parmi les copolymères (B1) de l'éthylène et d'un anhydride d'acide carboxylique insaturé et les copolymères (B2) de l'éthylène et d'un époxyde insaturé,
   - le rapport (B) / (A) étant compris entre 40/60 et 10/90 pour des proportions de modifiant choc entre 18 et 40% dans respectivement 82 à 60% de polyester,
   - le rapport (B) / (A) étant compris entre 40/60 et 25/75 pour des proportions de modifiant choc entre 2 et 18% dans respectivement 98 à 82% de polyester et avantageusement entre 5 et 18% dans respectivement 95 à 82% de polyester.

### [Description détaillée de l'invention]

Le terme polyester thermoplastique désigne des polymères qui sont des produits saturés de condensation de glycols et d'acides dicarboxyliques ou de leurs dérivés. De préférence ils comprennent les produits de condensation d'acides dicarboxyliques aromatiques ayant de 8 à 14 atomes de carbone et d'au moins un glycol choisi parmi le groupe constitué du neopentylglycol, du cyclohexanediméthanol et des glycols aliphatiques de formule HO(CH₂)ₙOH dans laquelle n est un entier valant de 2 à 10. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 12 atomes de carbone.

Les polyesters préférés sont le polyéthylène téréphtalate (PET), le poly(1,4-butylène) téréphtalate (PBT), le 1,4-cyclohexylène diméthylène téréphtalate/isophtalate) et d'autres esters dérivés d'acides aromatiques dicarboxyliques tels que l'acide isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (para oxybenzoïque), l'acide 1,3-triméthylène bis (p-oxybenzoique) et des glycols tels que l'éthylène glycol, le 1,3 triméthylène glycol, le 1,4-tétraméthylèneglycol, le 1,6-hexaméthylène glycol, le 1,3 propylène glycol, le 1,8 octaméthylèneglycol, le 1,10-decaméthylène glycol. Le MFI de ces polyesters, mesuré à 250°C sous 2,16 kg, peut varier de 2 à 100 et avantageusement de 10 à 80. "MFI" (abréviation de Melt Flow Index) désigne l'indice de fluidité à l'état fondu.

On ne sortirait pas du cadre de l'invention si les polyesters étaient constitués de plusieurs diacides et/ou plusieurs diols. On peut aussi utiliser un mélange de différents polyesters.

On ne sortirait pas du cadre de l'invention si les polyesters contenaient des copolyetheresters. Ces copolyetheresters sont des copolymères à blocs polyesters et blocs polyéther ayant des motifs polyéthers dérivés de polyétherdiols tels que le polyéthylène glycol (PEG), le polypropylène glycol (PPG) ou le polytétraméthylène glycol (PTMG), des motifs diacide carboxylique tels que l'acide téréphtalique et des motifs diols courts allongeurs de chaine tels que le glycol (éthane diol) ou le butane diol, 1-4. L'enchaînement des polyéthers et des diacides forme les segments souples alors que l'enchaînement du glycol ou du butane diol avec les diacides forme les segments rigides du copolyétherester. Ces copolyetheresters sont des élastomères thermoplastiques. La proportion de ces copolyetheresters peut représenter jusqu'à 30 parties pour 100 parties de polyester thermoplastique.

On ne sortirait pas du cadre de l'invention si les polyesters contenaient du polycarbonate. On désigne généralement par polycarbonate les polymères comprenant les motifs suivants : 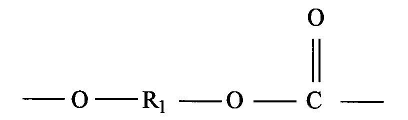 Dans lesquels R₁ est un groupe divalent aliphatique, alicyclique ou aromatique; les groupes aliphatiques et alicycliques peuvent contenir jusqu'à 8 atomes de carbone. A titre d'exemple de R1 on peut citer l'éthylène, le propylène, le triméthylène, le tetraméthylène, l'hexaméthylène, le dodécaméthylène, le poly-1,4-(2-buténylène), le poly-1,10-(2-éthyldecylène), le 1,3-cyclopentylène, le 1,3-cyclohéxylène, le 1,4-cyclohéxylène, le m-phénylène, le p-phénylène, le 4,4'-biphénylène, le 2,2-bis(4-phénylène)propane, le benzène-1,4-diméthylène. Avantageusement au moins 60% des groupes R1 dans le polycarbonate et de préférence tous les groupes R1 sont des aromatiques de formule :

―R₂―Y―R₃―

dans laquelle R2 et R3 sont des radicaux aromatiques monocycliques divalents et Y est un radical de liaison dans lequel un ou deux atomes séparent R2 et R3. Les valences libres sont généralement en position méta ou para par rapport à Y. R2 et R3 peuvent être des phénylènes substitués ou non substitués; on peut citer comme substituants des alkyles, des alkényles, des halogènes, des nitro et des alkoxy. On préfère les phenylènes non substitués, ils peuvent être ensemble ou séparément méta ou para et sont de préférence para. Le radical de liaison Y est de préférence tel qu'un atome sépare R2 et R3 et est de préférence un radical hydrocarboné tel que le méthylène, le cyclohéxylméthylène, le 2-[2,2,1]bicyclohéptylméthylène, l'éthylène, le 2,2-propylène, le 1,1-(2,2diméthylpropylène), le 1,1-cyclohéxylène, le 1,1-cyclopentadecylène, le cyclododecylène, le carbonyle, le radical oxy, le radical thio et le sulfone. De préférence R1 est le 2,2-bis(4-phénylène)propane qui vient du bisphénol A, c'est à dire que Y est l'isopropylidène et R2 et R3 sont chacun le p-phénylène. Avantageusement la viscosité intrinsèque du polycarbonate, mesurée dans le chlorure de méthylène à 25°C, est comprise entre 0,3 et 1 dl/g.

La proportion de polycarbonate peut représenter jusqu'à 30 parties pour 100 parties de polyester thermoplastique.

**S'agissant du copolymère coeur - écorce (A)** il se présente sous la forme de fines particules ayant un coeur en élastomère et au moins une écorce thermoplastique, la taille des particules est en général inférieure au pm et avantageusement comprise entre 200 et 500 nm. A titre d'exemple de coeur on peut citer les homopolymères de l'isoprène ou du butadiène, les copolymères de l'isoprène avec au plus 30% en moles d'un monomère vinylique et les copolymères du butadiène avec au plus 30% en moles d'un monomère vinylique. Le monomère vinylique peut être le styrène, un alkylstyrène, l'acrylonitrile ou un (meth)acrylate d'alkyle. Une autre famille de coeur est constituée par les homopolymères d'un (meth)acrylate d'alkyle et les copolymères d'un (meth)acrylate d'alkyle avec au plus 30% en moles d'un monomère vinylique. Le (meth)acrylate d'alkyle est avantageusement l'acrylate de butyle. Le monomère vinylique peut être le styrène, un alkylstyrène, l'acrylonitrile, le butadiène ou l'isoprène. Le coeur du copolymère (A) peut être réticulé en tout ou partie. Il suffit d'ajouter des monomères au moins difonctionnels au cours de la préparation du coeur, ces monomères peuvent être choisis parmi les esters poly(meth)acryliques de polyols tels que le di(meth)acrylate de butylène et le trimethylol propane trimethacrylate. D'autres monomères difonctionnels sont par exemple le divinylbenzène, le trivinylbenzène, l'acrylate de vinyle et le methacrylate de vinyle. On peut aussi réticuler le coeur en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (meth)acrylique et le méthacrylate de glycidyle.

L'écorce ou les écorces sont des homopolymères du styrène, d'un alkylstyrène ou du méthacrylate de méthyle ou des copolymères comprenant au moins 70% en moles de l'un de ces monomères précédents et au moins un comonomère choisi parmi les autres monomères précédents, l'acétate de vinyle et l'acrylonitrile. L'écorce peut être fonctionnalisée en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (meth)acrylique et le méthacrylate de glycidyle. A titre d'exemple on peut citer des copolymères coeur - écorce (A) ayant une écorce en polystyrène et des copolymères coeur - écorce (A) ayant une écorce en PMMA. Il existe aussi des copolymères coeur - écorce (A) ayant deux écorces , l'une en polystyrène et l'autre à l'exterieur en PMMA. Des exemples de copolymère (A) ainsi que leur procédé de préparation sont décrits dans les brevets suivants : US 4 180 494, US 3 808 180, US 4096 202, US 4 260 693, US 3 287 443, US 3 657 391, US 4 299 928, US 3 985 704.

Avantageusement le coeur représente, en poids, 70 à 90% de (A) et l'écorce 30 à 10%.

A titre d'exemple de copolymère (A) on peut citer celui constitué (i) de 75 à 80 parties d'un coeur comprenant en moles au moins 93% de butadiène, 5% de styrène et 0,5 à 1% de divinylbenzène et (ii) de 25 à 20 parties de deux écorces essentiellement de même poids l'une intérieure en polystyrène et l'autre extérieure en PMMA.

**S'agissant des copolymères (B1) de l'éthylène et d'un anhydride d'acide carboxylique insaturé** ils peuvent être des polyéthylènes greffés par un anhydride d'acide carboxylique insaturé ou des copolymères de l'éthylène et d'un anhydride d'acide carboxylique insaturé qu'on obtient par exemple par polymérisation radicalaire.

L'anhydride d'acide carboxylique insaturé peut être choisi par exemple parmi les anhydrides maléique, itaconique, citraconique, allylsuccinique, cyclohex-4-ène-1,2-dicarboxylique, 4―méthylènecyclohex-4-ène-1,2-dicarboxylique, bicyclo(2,2,1)hept-5-ène-2,3-dicarboxylique, et x―méthylbicyclo(2,2,1)hept-5-ène-2,2-dicarboxylique. On utilise avantageusement l'anhydride maléique. On ne sortirait pas du cadre de l'invention en remplaçant tout ou partie de l'anhydride par un acide carboxylique insaturé tel que par exemple l'acide (meth)acrylique.
S'agissant des polyéthylènes sur lesquels on vient greffer l'anhydride d'acide carboxylique insaturé on entend par polyéthylène des homo- ou copolymères. A titre de comonomères, on peut citer :
- les alpha-oléfines, avantageusement celles ayant de 3 à 30 atomes de carbone, de carbone; à titre d'exemples d'alpha oléfines on peut citer le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1―eicocène, le 1-dococène, le 1-tétracocène, le 1-hexacocène, le 1―octacocène, et le 1-triacontène; ces alpha-oléfines peuvent être utilisées seules ou en mélange de deux ou de plus de deux,
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les esters vinyliques d'acides carboxyliques saturés tels que par exemple l'acétate ou le propionate de vinyle.
- les diènes tels que par exemple le 1,4-hexadiène.
- le polyethylene peut comprendre plusieurs des comonomères précédents. Avantageusement le polythylène qui peut être un mélange de plusieurs polymères, comprend au moins 50% et de préférence 75% (en moles) d'éthylène, sa densité peut être comprise entre 0,86 et 0,98 g/cm³. Le MFI (indice de fluidité à 190°C, 2,16 kg) est compris avantageusement entre 0,1 et 1000 g/10 min.

A titre d'exemple de polyéthylènes on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthamides peuvent aussi être utilisés.
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%.

Le greffage est une opération connue en soi.
S'agissant des copolymères de l'éthylène et de l'anhydride d'acide carboxylique insaturé c'est-à-dire ceux dans lesquels l'anhydride d'acide carboxylique insaturé n'est pas greffé il s'agit des copolymères de l'éthylène, de l'anhydride d'acide carboxylique insaturé et éventuellement d'un autre monomère pouvant être choisi parmi les comonomères qu'on a cité plus haut pour les copolymères de l'éthylène destinés à être greffés.
On utilise avantageusement les copolymères éthylène-anhydride maléique et éthylène - (méth)acrylate d'alkyle - anhydride maléique. Ces copolymères comprennent de 0,2 à 10 % en poids d'anhydride maléique, de 0 à 40 % et de préférence 5 à 40 % en poids de (méth)acrylate d'alkyle. Leur MFI est compris entre 0,5 et 200 (190°C - 2,16 kg). Les (méth)acrylates d'alkyle ont déjà été décrits plus haut. On peut utiliser un mélange de plusieurs copolymères (B1), on peut aussi utiliser un mélange d'un copolymère éthylène-anhydride maléique et d'un copolymère éthylène - (méth)acrylate d'alkyle - anhydride maléique.

Le copolymère (B1) est disponible dans le commerce il est produit par polymérisation radicalaire à une pression pouvant être comprise entre 200 et 2500 bars, il est vendu sous forme de granulés.

**S'agissant de (B2), les copolymères de l'éthylène et d'un époxyde insaturé,** ils peuvent être obtenus par copolymérisation de l'éthylène et d'un époxyde insaturé ou par greffage de l'époxyde insaturé sur le polyéthylène. Le greffage peut être effectué en phase solvant ou sur le polyéthylène en fusion en présence d'un peroxyde. Ces techniques de greffage sont connues en elles-mêmes. Quant à la copolymérisation de l'éthylène et d'un époxyde insaturé, on peut utiliser les procédés dits de polymérisation radicalaire fonctionnant habituellement à des pressions entre 200 et 2 500 bars.

A titre d'exemple d'époxydes insaturés, on peut citer :
- les esters et éthers de glycidyle aliphatiques tels que l'allyl glycidyléther, le vinyle glycidyléther, le maléate et l'itaconate de glycidyle, le (méth)acrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, le 5-norbornène-2-méthyl-2-glycidyl carboxylate et l'endo cis-bicyclo(2,2,1)-5-heptène-2,3-diglycidyl dicarboxylate.

S'agissant du greffage le copolymère s'obtient à partir du greffage d'un polyéthylène homo ou copolymère comme décrit pour (B1) sauf qu'on greffe un époxyde au lieu d'un anhydride. S'agissant d'une copolymèrisation c'est aussi semblable à (B1) sauf qu'on utilise un époxyde, il peut aussi y avoir d'autres comonomères comme dans le cas de (B1).
Le produit (B2) est avantageusement un copolymère éthylène - (méth)acrylate d'alkyle - époxyde insaturé ou un copolymère éthylène - époxyde insaturé. Avantageusement il peut contenir jusqu'à 40% en poids de (méth)acrylate d'alkyle, de préférence 5 à 40 % et jusqu'à 10% en poids d'époxyde insaturé, de préférence 0,1 à 8%.
L'époxyde est avantageusement le (méth)acrylate de glycidyle.
Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est avantageusement de 20 à 35%. Le MFI est avantageusement compris entre 0,5 et 200 (en g/10 min à 190°C sous 2,16 kg). On peut utiliser un mélange de plusieurs copolymères (B2), on peut aussi utiliser un mélange d'un copolymère éthylène - (méth)acrylate d'alkyle - époxyde insaturé et d'un copolymère éthylène - époxyde insaturé. On peut aussi utiliser des mélanges de (B1) et (B2).

Ce copolymère (B2) peut être obtenu par polymérisation radicalaire des monomères.

Avantageusement les compositions de polyesters thermoplastiques de l'invention comprennent pour 100 parties en poids 75 à 95 parties de polyester pour respectivement 25 à 5 parties de modifiant choc.

Avantageusement les proportions de (A) et (B) sont telles que le rapport (B) / (A) est compris entre 40/60 et 25/75 quelque soit la quantité de modifiant choc dans le polyester.

Parmi les copolymères (B) on utilise avantageusement les copolymères (B2).

L'invention concerne aussi une composition de modifiant choc ayant ces proportions.

Les polyesters thermoplastiques de l'invention peuvent aussi comprendre en plus du modifiant choc des agents glissants, des agents antibloquants, des antioxydants, des anti U.V. et des charges. Les charges peuvent être des fibres de verre, des ignifugeants, du talc ou de la craie.

Les mélanges du polyester thermoplastique et des modifiants choc sont préparés par les techniques habituelles des polymères thermoplastiques dans des extrudeuses mono ou double vis, des mélangeurs ou des appareils du type Ko malaxeur BUSS®. Le polyester et les constituants du modifiant choc, à savoir les copolymères (A) et (B) peuvent être introduits séparément dans le dispositif mélangeur. Les constituants du modifiant choc peuvent être aussi ajoutés sous forme d'un mélange préparé à l'avance, éventuellement sous forme de mélange maître dans le polyester. On peut ajouter dans ces appareils les additifs tels que les agents glissants, les agents antibloquants, les antioxydants, les anti U.V. et les charges soit tels quels soit sous forme de mélange maître dans le polyester soit encore sous forme de mélange maître avec un ou plusieurs des copolymères (A) et (B). La composition de modifiants choc comprenant (A) et (B) qu'on peut ajouter dans les polyesters est aussi préparée par la technique précédente habituelle de mélange des polymères thermoplastiques.

### [Exemples]

On a utilisé les produits suivants:
**AX8900** : copolymère éthylène - acrylate de méthyle - méthacrylate de glycidyle(GMA) comprenant en poids 25% d'acrylate et 8% de GMA ayant un MFI de 6 (190°C 2,16 kg). Il est vendu sous la marque LOTADER® par ELF ATOCHEM.
**AX8930** : copolymère éthylène - acrylate de méthyle - méthacrylate de glycidyle(GMA) comprenant en poids 25% d'acrylate et 3% de GMA ayant un MFI de 6 (190°C 2,16 kg). Il est vendu sous la marque LOTADER® par ELF ATOCHEM.
**E920** : core -shell de type MBS à coeur essentiellement à base de butadiène et styrène et d'une écorce de PMMA vendu par ELF ATOCHEM sous la marque METABLEND®.
**EXL2314** : core -shell acrylique fonctionnalisé époxy vendu par RHOM et HAAS sous la marque PARALOID®.
**PBT** : polybutylène terephtalate de MFI 20 (à 250°C sous 2,16 kg) vendu sous la marque ULTRADUR® B4500 par BASF.

Tous les exemples ont été réalisés avec des compositions comprenant en poids 80% de PBT et 20% de modifiant choc. Le choc Charpy entaillé est conforme à la norme ISO 179:93, plus la valeur est élevée meilleure est la resistance au choc.

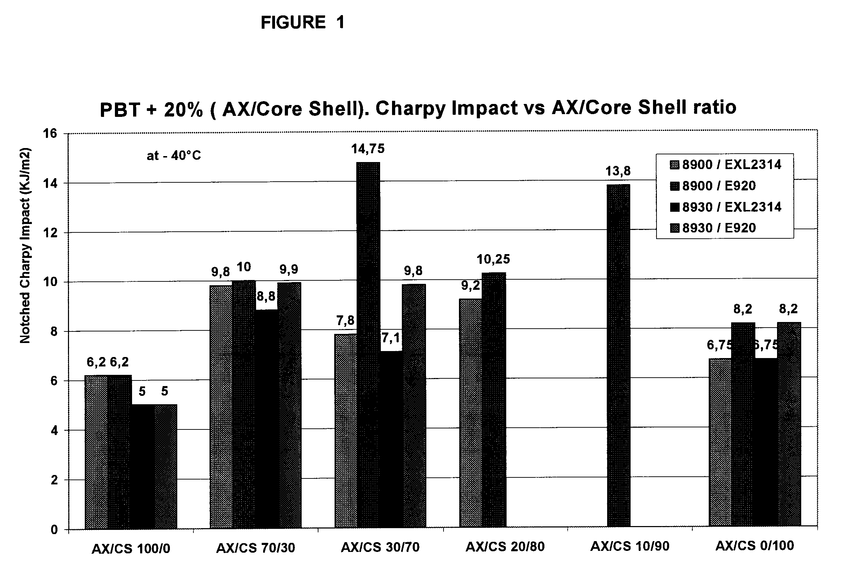

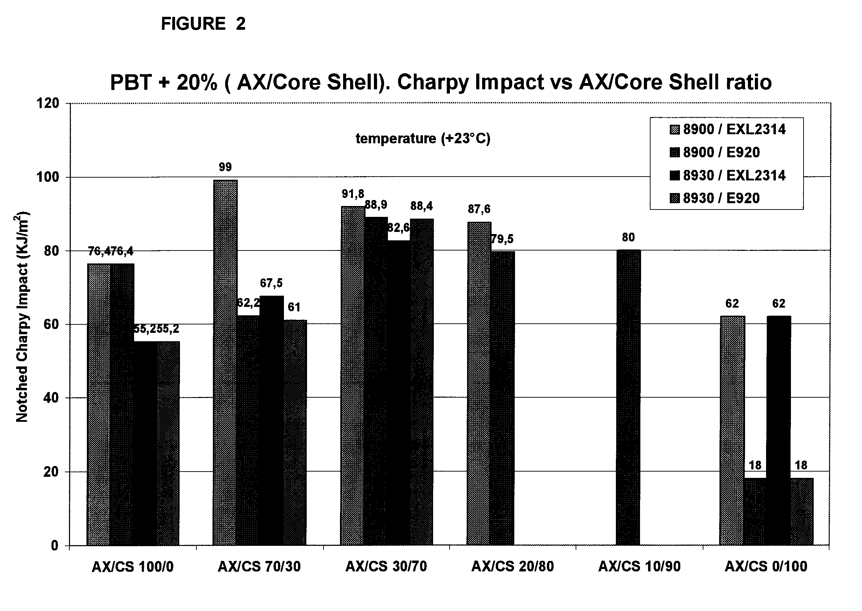

Sur la **FIGURE 1** on a représenté le choc Charpy entaillé à - 40°C pour du PBT contenant du modifiant choc constitué soit d'AX, soit de core- shell soit de leur mélange. On a utilisé deux sortes d'AX: l'AX8900 et l'AX8930 et deux sortes de core-shell: l'EXL2314 et l'E920. Sur la **FIGURE 2** on a représenté les résistances au choc de ces mêmes compositions pour +23°C. Sur ces figures et dans les tableaux le copolymère à l'époxyde a été designé par AX et le coeur - écorce par CS. Le rapport AX/CS est en poids, "30/70" signifie 30 parties d'AX et 70 parties de CS. Les valeurs sont aussi sur les **TABLEAU 1** et **TABLEAU 2**.

**TABLEAU 1**

| PBT+20%(AX+CS) AX=AX8900 ouAX8930 CS=EXL2314 ou E920 | Choc Charpy entaillé à - 40°C | | | |
|---|---|---|---|---|
| | AX8900 EXL2314 | AX8900/E920 | AX8930 EXL2314 | AX8930 / E920 |
| AX/CS 100/0 comparatif | 6,2 | 6,2 | 5 | 5 |
| AX/CS 70/30 comparatif | 9,8 | 10 | 8,8 | 9,9 |
| AX/CS 30/70 | 7,8 | 14,75 | 7,1 | 9,8 |
| AX/CS 20/80 | 9,2 | 10,25 | | |
| AX/CS 10/90 | | 13,8 | | |
| AX/CS 0/100 comparatif | 6,75 | 8,2 | 6,75 | 8,2 |

**TABLEAU 2**

| PBT+20%(AX+CS) AX=AX8900 ouAX8930 CS=EXL2314 ou E920 | Choc Charpy entaillé à +23°C | | | |
|---|---|---|---|---|
| | AX8900 EXL2314 | AX8900/E920 | AX8930 EXL2314 | AX8930 / E920 |
| AX/CS 100/0 comparatif | 76,4 | 76,4 | 55,2 | 55,2 |
| AX/CS 70/30 comparatif | 99 | 62,2 | 67,5 | 61 |
| AX/CS 30/70 | 91,8 | 88,9 | 82,6 | 88,4 |
| AX/CS 20/80 | 87,6 | 79,5 | | |
| AX/CS 10/90 | | 80 | | |
| AX/CS 0/100 comparatif | 62 | 18 | 62 | 18 |

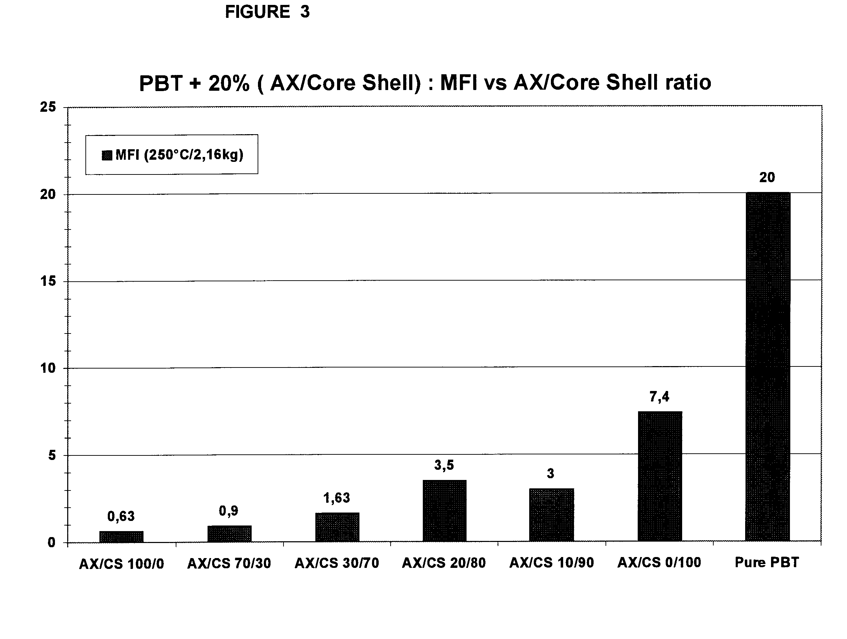

Sur la **FIGURE 3** on a représenté le MFI des compositions précédentes contenant les différents modifiants choc et en plus le MFI du PBT sans modifiant : "pure PBT". Les valeurs sont aussi représentées sur le **TABLEAU 3** suivant.

**TABLEAU 3**

| PBT+20%(AX+CS) AX=AX8900 ouAX8930 CS=EXL2314 ou E920 | MFI (250°C/2,16kg) ne change pas avec le type d'AX et CS |
|---|---|
| AX/CS 100/0 comparatif | 0,63 |
| AX/CS 70/30 comparatif | 0,9 |
| AX/CS 30/70 | 1,63 |
| AX/CS 20/80 | 3,5 |
| AX/CS 10/90 | 3 |
| AX/CS 0/100 comparatif | 7,4 |
| Pure PBT comparatif | 20 |

## Revendications

1. Compositions de polyesters thermoplastiques comprenant, en poids:
(i) un polyester thermoplastique,
(ii) un modifiant choc comprenant:
(a) un copolymère (A) coeur - écorce,
(b) un copolymère (B) de l'éthylène choisi parmi les copolymères (B1) de l'éthylène et d'un anhydride d'acide carboxylique insaturé, les copolymères (B2) de l'éthylène et d'un époxyde insaturé et leurs mélanges,
(iii) le rapport (B) / (A) étant compris entre 40/60 et 10/90 pour des proportions de modifiant choc entre 18 et 40% dans respectivement 82 à 60% de polyester,
(iv) le rapport (B) / (A) étant compris entre 40/60 et 25/75 pour des proportions de modifiant choc entre 2 et 18% dans respectivement 98 à 82% de polyester et avantageusement entre 5 et 18% dans respectivement 95 à 82% de polyester.

2. Compositions selon la revendication 1 dans laquelle le polyester est choisi parmi le PET et le PBT.

3. Compositions selon la revendication 1 ou 2 comprenant jusqu'à 30 parties en poids de copolyetherester pour 100 parties de polyester thermoplastique.

4. Compositions selon l'une quelconque des revendications précédentes comprenant jusqu'à 30 parties en poids de polycarbonate pour 100 parties de polyester thermoplastique.

5. Compositions selon l'une quelconque des revendications précédentes dans lesquelles le copolymère (A) comprend un coeur en élastomère et au moins une écorce thermoplastique.

6. Compositions selon l'une quelconque des revendications précédentes dans lesquelles les copolymères (B1) sont des copolymères éthylène - (méth)acrylate d'alkyle - anhydride maléique qui comprennent de 0,2 à 10 % en poids d'anhydride maléique, de 0 à 40 % et de préférence 5 à 40 % en poids de (méth)acrylate d'alkyle.

7. Compositions selon l'une quelconque des revendications 1 à 5 dans lesquelles les copolymères (B2) de l'éthylène et d'un époxyde insaturé sont des copolymères éthylène/(méth)acrylate d'alkyle/époxyde insaturé obtenus par copolymérisation des monomères et contiennent de 0 à 40% en poids de (méth)acrylate d'alkyle et jusqu'à 10% en poids d'époxyde insaturé.

8. Compositions selon l'une quelconque des revendications précédentes comprenant, pour 100 parties en poids, 75 à 95 parties de polyester pour respectivement 25 à 5 parties de modifiant choc.

9. Compositions selon l'une quelconque des revendications précédentes dans lesquelles les proportions de (A) et (B) sont telles que le rapport (B) / (A) est compris entre 40/60 et 25/75 quelque soit la quantité de modifiant choc dans le polyester.

10. Compositions de modifiants choc comprenant :
(a) un copolymère (A) coeur - écorce,
(b) un copolymère (B) de l'éthylène choisi parmi les copolymères (B1) de l'éthylène et d'un anhydride d'acide carboxylique insaturé, les copolymères (B2) de l'éthylène et d'un époxyde insaturé et leurs mélanges,
• le rapport (B) / (A) étant compris entre 40/60 et 10/90 pour des proportions de modifiant choc entre 18 et 40% dans respectivement 82 à 60% de polyester,
• le rapport (B) / (A) étant compris entre 40/60 et 25/75 pour des proportions de modifiant choc entre 2 et 18% dans respectivement 98 à 82% de polyester et avantageusement entre 5 et 18% dans respectivement 95 à 82% de polyester.
